# EUROPÄISCHE PATENTSCHRIFT

(11) **EP 3 970 211 B1**
(45) Veröffentlichungstag und Bekanntmachung des Hinweises auf die Patenterteilung: **25.10.2023**
(21) Anmeldenummer: 20721496.6
(22) Anmeldetag: 22.04.2020
(51) Int. Cl.: H01M 50/204, H01M 50/503, B63G 8/08

(54) **UNTERSEEBOOT**
SUBMARINE
SOUS-MARIN

(30) Priorität: 16.05.2019 DE 102019207184
(43) Veröffentlichungstag der Anmeldung: 23.03.2022
(73) Patentinhaber: thyssenkrupp Marine Systems GmbH, 24143 Kiel (DE); thyssenkrupp AG, 45143 Essen (DE)
(72) Erfinder: DANNENBERG, Norbert, 24220 Böhnhusen (DE); SIEVERS, Tim, 24808 Jevenstedt (DE)
(74) Vertreter: thyssenkrupp Intellectual Property GmbH
(86) Internationale Anmeldenummer: PCT/EP2020/061115
(87) Internationale Veröffentlichungsnummer: WO 2020/229107

(56) Entgegenhaltungen:
- EP-A1- 2 808 926
- EP-A1- 3 462 519
- EP-A2- 1 641 066
- WO-A1-2005/073075
- WO-A1-2018/162602
- DE-A1-102015 216 097
- US-A1- 2014 255 748
- US-A1- 2018 109 016
- US-A1- 2018 261 823
- W.H. Wang ET AL: "The State-of-Art of Underwater Vehicles - Theories and Applications" In: "Mobile Robots - State of the Art in Land, Sea, Air, and Collaborative Missions", 1. Mai 2009 (2009-05-01), InTech, XP55199899, ISBN: 978-9-53-307001-8 DOI: 10.5772/6992, das ganze Dokument

## Beschreibung

Die Erfindung betrifft eine Stromsammelschiene in einem Unterseeboot.

Anlagen auf einem Unterseeboot unterscheiden sich grundsätzlich von landbasierten Anwendungen. Zum einen ist der in einem Unterseeboot zur Verfügung stehende Platz extrem gering. Des Weiteren bestehen nur wenige Möglichkeiten Gegenstände in das Innere eines Unterseeboots zu bringen, insbesondere bei Nachrüstungen oder Modernisierungen. Diese müssen dann lukgängig sein, also durch eine bestehende Öffnung einbringbar sein. Dieses beschränkt die Größe der Einzelteile. Gerade in Bereichen, welche nicht regelmäßig von Personen benutzt werden, beispielsweise ein Batterieraum, wird der Platz praktisch vollumfänglich genutzt, sodass im Wartungs- oder Reparaturfall nur sehr wenig Platz zur Verfügung steht. Des Weiteren ist auf einem Unterseeboot auch immer darauf zu achten, dass die Signatur so gering wie möglich gehalten wird, also die Wahrscheinlichkeit der Detektion des Unterseeboots durch ein drittes Schiff so gering wie möglich gehalten wird.

Des Weiteren sind die Umgebungsbedingungen auf einem Unterseeboot oftmals deutlich größeren Schwankungen ausgelegt. So variiert der Druck im Inneren eines Unterseeboots deutlich stärker, als der Luftdruck an Land.

Heutige Unterseeboote verwenden regelmäßig Bleiakkumulatoren als Batterien. Inzwischen haben Batterien auf Basis von Lithium jedoch eine ausreichend hohe Zuverlässigkeit entwickelt, sodass diese auch im Inneren eines Unterseeboots einsetzbar sind. Es besteht somit auch der Wunsch bestehen Unterseeboote von einer Technologie auf Bleiakkumulator-Basis auf eine Lithium-Basis zu modernisieren. Im Rahmen einer solchen Modernisierung ist es jedoch regelmäßig notwendig, auch die Stromabfuhr zu ersetzen.

Die einzelne Zelle eines Bleiakkumulators kann vergleichsweise groß gebaut werden. Zellen auf Lithium-Basis sind hingegen kleiner und werden dadurch regelmäßig in Modulen zusammengefasst. Um die hohe Fahrspannung eines Unterseeboots zu erreichen, werden Bleiakkumulatoren daher regelmäßig in Reihe geschaltet. Durch die Verwendung von Zellen auf Lithium-Basis wird innerhalb eines Moduls eine höhere Spannung erreicht, sodass die Module auch parallel geschaltet werden können. Somit ergibt sich wenigstens bei der Umrüstung oftmals die Problematik, dass die elektrische Verbindung nicht mehr von Batterie zu Batterie hergestellt wird, sondern dass eine zentrale Sammelschiene zum Leiten der elektrischen Energie notwendig ist, welche jedoch in den geringen vorhandenen Bauraum des Batterieraumes integriert werden muss.

Aus der US 2018 / 0 261 823 A1 ist ein Batteriepack mit einem Sammelleiter bekannt.

Aufgabe der Erfindung ist es, ein System bereitzustellen, welches Strom aus einem Batterieraum herausführen kann und welches einfach in einen bestehenden Batterieraum eines Unterseeboots integrierbar ist.

Gelöst wird diese Aufgabe durch das Unterseeboot mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Unterseeboot mit einem Batterieraum weist wenigstens zwei Batterien auf. Üblicherweise weist ein Unterseeboot eine Vielzahl an Batterien auf. Insbesondere bei der Verwendung der Lithium-Ionen-Batterien werden diese in Batteriemodulen zusammengefasst. Elektrisch verhalten sich diese Module wie eine Batterie, üblicherweise jedoch bei höherer Spannung als der Spannung der einzelnen Zelle entspricht. Im Sinne der Erfindung kann es sich aber bei der Batterie aber um mindestens ein Primärelement oder mindestens ein Sekundärelement handeln, ohne auf eine bestimmte galvanische Ausführung beschränkt zu sein. Bevorzugt handelt es sich bei der Batterie um mindestens ein Sekundärelement auf Blei- oder Lithium-Basis. Besonders bevorzugt weist die Batterie eine Mehrzahl an Sekundärelementen, weiter bevorzugt eine Mehrzahl an Sekundärelementen auf Lithium-Basis, auf.

Der Batterieraum weist wenigstens eine Stromschiene auf, wobei die Stromschiene wenigstens ein erstes Schienenelement für eine erste Phase und ein zweites Schienenelement für eine zweite Phase aufweist.

Die erste Phase kann das positive Potential der Batterie und die zweite Phase das negative Potential der Batterie oder umgekehrt aufweisen.

Die Batterien sind über jeweils eine elektrisch leitfähige Verbindung mit der Stromschiene verbunden, wobei die Verbindung ein erstes Kabel für eine erste Phase und ein zweites Kabel für eine zweite Phase aufweist.

Das erste Schienenelement und das erste Kabel sind über eine Klemmverbindung mit einander verbunden und das zweite Schienenelement und das zweite Kabel sind über eine Klemmverbindung miteinander verbunden. Die Verbindung ist eine Verbindung, welche einen elektrischen Kontakt herstellt. Es findet keine formschlüssige oder stoffschlüssige Verbindung statt. Bevorzugt handelt es sich um eine federbelastete Klemmverbindung und nicht um eine Schraubklemmverbindung.

Erfindungsgemäß weist die Stromschiene ein drittes Schienenelement für eine erste Phase und ein viertes Schienenelement für eine zweite Phase auf.

Erfindungsgemäß sind die Schienenelemente der Stromschiene derart angeordnet, dass das erste Schienenelement und das zweite Schienenelement parallel nebeneinander angeordnet sind sowie das dritte Schienenelement und das vierte Schienenelement parallel nebeneinander angeordnet sind.

Erfindungsgemäß sind die Schienenelemente flach, vorzugsweise mit rechteckigen Querschnitt, ausgebildet. Bevorzugt weist der Querschnitt senkrecht zur Länge des Schienenelements eine Breitseite auf, welche größer als die Querseite des Querschnitts ist. Das erste Schienenelement und das zweite Schienenelement sind mit der Breitseite zueinander benachbart angeordnet. Ebenso sind das dritte Schienenelement und das vierte Schienenelement mit der Breitseite zueinander benachbart angeordnet. Das erste Schienenelement und das vierte Schienenelement sind in einer Ebene angeordnet, ebenso sind das zweite Schienenelement und das dritte Schienenelement in einer Ebene angeordnet. Das erste Schienenelement und das vierte Schienenelement sind bevorzugt mit der Querseite zueinander angeordnet, ebenso sind das zweite Schienenelement und das dritte Schienenelement bevorzugt mit der Querseite zueinander angeordnet.

In einer weiteren Ausführungsform der Erfindung weist die Stromschiene ein fünftes Schienenelement für eine erste Phase und ein sechstes Schienenelement für eine zweite Phase auf. Die Stromschiene weist weiter ein siebentes Schienenelement für eine erste Phase und ein achtes Schienenelement für eine zweite Phase auf.

In einer weiteren Ausführungsform der Erfindung sind die Schienenelemente mit unterschiedlichen Phasen abwechselnd angeordnet.

In einer weiteren Ausführungsform der Erfindung ist die Stromschiene zu einer mittig liegenden vertikalen Symmetrieebene angeordnet. Die Schienenelemente jeder Seite sind mit unterschiedlichen Phasen abwechselnd angeordnet, wobei die direkt an der Symmetrieebene liegenden, benachbarten Schienenelemente die gleiche Phase aufweisen.

In einer weiteren Ausführungsform der Erfindung sind die Schienenelemente der Stromschiene derart angeordnet, dass das erste Schienenelement, das zweite Schienenelement, das sechste Schienenelement und das fünfte Schienenelement parallel nebeneinander angeordnet sind, sowie das achte Schienenelement, das siebte Schienenelement, das dritte Schienenelement und das vierte Schienenelement parallel nebeneinander angeordnet sind.

In einer weiteren Ausführungsform der Erfindung sind die Schienenelemente flach, vorzugsweise mit rechteckigem Querschnitt, ausgebildet. Das erste Schienenelement, das zweite Schienenelement, das sechste Schienenelement und das fünfte Schienenelement sind mit der Breitseite zueinander benachbart angeordnet. Das achte Schienenelement, das siebente Schienenelement, das dritte Schienenelement und das vierte Schienenelement sind mit der Breitseite zueinander benachbart angeordnet. Das erste Schienenelement und das vierte Schienenelement sind in einer Ebene angeordnet, das zweite Schienenelement und das dritte Schienenelement sind in einer Ebene angeordnet, das sechste Schienenelement und das siebente Schienenelement sind in einer Ebene angeordnet und das fünfte Schienenelement und das achte Schienenelement sind in einer Ebene angeordnet.

In einer weiteren Ausführungsform der Erfindung weist die Verbindung ein drittes Kabel für die erste Phase und ein viertes Kabel für die zweite Phase auf. Die Kabel sind bevorzugt parallel zueinander angeordnet. Die Kabel sind derart angeordnet, dass diese im Querschnitt an den Ecken eines Rechtecks, bevorzugt eines Quadrats, liegen, wobei die Phasen an den Ecken des Rechtecks, bevorzugt des Quadrats, alternierend angeordnet sind.

In einer weiteren Ausführungsform der Erfindung ist das erste Kabel jeweils mittels einer Klemmverbindung mit dem ersten Schienenelement und dem fünften Schienenelement elektrisch verbunden. Ferner ist das zweite Kabel jeweils mittels einer Klemmverbindung mit dem zweiten Schienenelement und dem sechsten Schienenelement elektrisch verbunden. Ferner ist das dritte Kabel jeweils mittels einer Klemmverbindung mit dem dritten Schienenelement und dem siebten Schienenelement elektrisch verbunden. Ferner ist das vierte Kabel jeweils mittels einer Klemmverbindung mit dem vierten Schienenelement und dem achten Schienenelement elektrisch verbunden.

In einer weiteren Ausführungsform der Erfindung ist das zweite Kabel jeweils mittels einer elektrisch isolierten Klemmverbindung mit dem ersten Schienenelement und dem fünften Schienenelement verbunden. Ferner ist das erste Kabel jeweils mittels einer elektrisch isolierten Klemmverbindung mit dem zweiten Schienenelement und dem sechsten Schienenelement verbunden. Ferner ist das vierte Kabel jeweils mittels einer elektrisch isolierten Klemmverbindung mit dem dritten Schienenelement und dem siebten Schienenelement verbunden. Ferner ist das dritte Kabel jeweils mittels einer elektrisch isolierten Klemmverbindung mit dem vierten Schienenelement und dem achten Schienenelement verbunden.

In einer weiteren Ausführungsform der Erfindung ist die Stromschiene flexibel, Bevorzugt ist die Stromschiene dadurch flexibel ausgeführt, dass die Schienenelemente flexibel ausgeführt sind. Besonders bevorzugt ist flexibel im Sinne der Erfindung nicht eine freie Bewegbarkeit in alle Richtungen, sondern besonders bevorzugt die Biegsamkeit in einer Raumrichtung. Besonders bevorzugt wird die Biegsamkeit durch einen lamellenartigen Aufbau erzielt.

In einer weiteren Ausführungsform der Erfindung sind die Schienenelemente aus einzelnen leitfähigen Lagen aufgebaut. Unter einzelnen leitfähigen Lagen wird im Sinne der Erfindung verstanden, dass das Schienenelement aus verschiedenen flachen Metallstreifen aufgebaut ist, welche wenigstens stellenweise miteinander elektrisch verbunden sind. Die Metallstreifen können mechanisch gegeneinander bewegbar sein, Durch den Aufbau aus Metallstreifen wird eine Biegsam- oder Verformbarkeit des Schienenelements in zumindest eine Richtung erreicht. Dieses ist insbesondere vorteilhaft, um thermische Ausdehnung im Betrieb kompensieren zu können, da das Stromschienenelement dann entstehenden Spannungen durch reversible Verformungen abbauen kann. Die Halteelemente müssen diese Kraft nicht aufnehmen. Des Weiteren wird durch die Biegsamkeit die Einbringung in ein Unterseeboot deutlich erleichtert. Bevorzugt sind die Schienenelemente aus 5 bis 50 Lagen, besonders bevorzugt aus 10 bis 25 Lagen aufgebaut, wobei die Lagen vorzugsweise insgesamt durch eine entfernbare Isolationsschicht umgeben sind. Die Isolationsschicht verhindert bei der seitlichen Bewegung des Stromschienenelements einen Lichtbogen oder Kurzschluss zwischen den Stromschienenelementen unterschiedlicher Phase oder anderen Bauteilen mit anderem Potential, wenn sich durch die seitliche Bewegung die Abstände zu diesen Elementen verändern. Die Isolation ist dabei an den Stellen, an denen ein elektrischer Kontakt hergestellt werden soll, entfernt.

In einer weiteren Ausführungsform der Erfindung sind die Stromschienenelemente über die Länge des Batterieraums einstückig ausgeführt.

In einer alternativen weiteren Ausführungsform werden die Stromschienenelemente über die Länge des Batterieraums aus zwei bis fünf Segmenten zusammengesetzt. Hierdurch müssen nur kürzere Segmente in das Innere des Unterseeboots eingebracht werden, wodurch die Einbringung erleichtert wird. Bevorzugt weisen die Stromschienenelemente zwei oder drei Segmente auf. Ein Segment weist bevorzugt eine Länge von 1,5 m bis 7 m, bevorzugt von 2 m bis 5 m auf.

In einer weiteren Ausführungsform weisen die Stromschienenelemente über die Länge des Batterieraums einen zunehmenden Querschnitt auf. Da die maximale Stärke des Stroms mit der Anzahl der angeschlossenen Batterien über die Länge zum Energieeinspeisepunkt hin zunimmt, kann der Querschnitt der Stromschienenelemente mit der Entfernung vom Einspeisepunkt kleiner werden. Sofern das Stromschienenelement aus mehreren Abschnitten besteht, kann die Querschnittsgröße mit jedem Abschnitt stufenweise erhöht werden. Es kann auch vorgesehen sein, sofern das Stromschienenelement aus leitfähigen Lagen besteht, dass der unterschiedliche große Querschnitt über eine zunehmende Anzahl an Lagen erzeugt wird, wobei die einzelnen Lagen eine unterschiedliche Länge aufweisen.

In einer weiteren Ausführungsform der Erfindung weist die Stromschiene für jede Batterie einen Stromabnahmepunkt auf, wobei die Stromschiene am Stromabnahmepunkt nicht isoliert ist. Somit kann die Stromschiene einfach außerhalb des Unterseeboots montiert und anschließend in das Unterseeboot und insbesondere in den Batterieraum des Unterseeboots eingebracht werden. Anschließend muss lediglich die Kontaktierung der Kabel an den nicht isolierten Stellen erfolgen.

In einer weiteren Ausführungsform der Erfindung weist die Stromschiene Lagerungspunkte auf, wobei die Stromschiene an den Lagerungspunkten mechanisch mit dem Unterseeboot verbunden ist. Beispielsweise und bevorzugt können jeweils zwei Lagerungspunkte neben einem Stromabnahmepunkt angeordnet sein.

In einer weiteren Ausführungsform der Erfindung sind die Schienenelemente über Klemmverbindungen, die als Sammelelemente ausgeführt sind mit den Kabeln verbunden. Ein Sammelelement kann insbesondere kammförmig ausgebildet sein und klemmt alle Schienenelemente, die breitseitig zueinander angeordnet sind gleichzeitig. Beispielsweise und bevorzugt kann ein kammförmiges Sammelelement das erste Schienenelement, das zweite Schienenelement, das sechste Schienenelement und das fünfte Schienenelement kontaktieren, wobei beispielsweise das erste Schienenelement und das fünfte Schienenelement elektrisch isolierend und somit nur mechanisch kontaktiert werden und das zweite Schienenelement und das sechste Schienenelement elektrisch leitfähig kontaktiert werden. Bevorzugt gibt es ein weiteres kammförmiges Sammelelement, bei welchem die mechanische und elektrische Kontaktierung genau umgedreht ist. Also beispielsweise und bevorzugt wird das weitere kammförmige Sammelelement das erste Schienenelement, das zweite Schienenelement, das sechste Schienenelement und das fünfte Schienenelement kontaktieren, wobei beispielsweise das erste Schienenelement und das fünfte Schienenelement elektrisch leitfähig kontaktiert werden und das zweite Schienenelement und das sechste Schienenelement elektrisch isolierend und somit nur mechanisch kontaktiert werden. Ebenso gibt es bevorzugt ein kammförmiges Sammelelement dass das vierte Schienenelement, das dritte Schienenelement, das siebente Schienenelement und das achte Schienenelement kontaktiert, wobei beispielsweise das vierte Schienenelement und das achte Schienenelement elektrisch isoliert und somit nur mechanisch kontaktiert werden und das dritte Schienenelement und das siebente Schienenelement elektrisch leitfähig kontaktiert werden. Bevorzugt gibt es ein weiteres kammförmiges Sammelelement, bei welchem die mechanische und elektrische Kontaktierung genau umgedreht ist.

In einer weiteren Ausführungsform der Erfindung werden die einzelnen Kontakte der kammförmigen Sammelelemente durch elektrisch isolierende, herausnehmbare Einlagen isolierend.

In einer weiteren Ausführungsform der Erfindung werden die kammförmigen Sammelelemente mittels einem isolierenden Gehäuse an einem Stromabnahmepunkt mit der Stromschiene angeordnet. In einer bevorzugten Weiterbildung dieser Ausführungsform ist vorgesehen, dass das Gehäuse an einer Struktur des Unterseeboots befestigt und mechanisch gehaltert ist. In einer alternativen bevorzugten Weiterbildung dieser Ausführungsform ist vorgesehen, dass das Gehäuse nicht an einer Struktur des Unterseeboots befestigt ist, sondern es weitere mechanische Halterungen gibt, die die Stromschiene mechanisch halten und zwischen den isolierenden Gehäusen angebracht sind. Des Weiteren kann in beiden Weiterbildungen der Ausführungsform vorgesehen sein, dass es mechanische, kammförmige Abstandshalter gibt, die nur mit den Stromschienen verbunden sind und bei einer Verformung der Stromschiene einen Abstand der Schienenelemente zueinander wahren.

In einer weiteren Ausführungsform der Erfindung weisen die Verbindungen ein Schaltelement auf, wodurch die elektrische Verbindung zwischen Batterie und Stromschiene getrennt und hergestellt werden kann. Das Schaltelement kann elektrisch betrieben werden. Dieses ist zur gezielten Steuerung vorteilhaft. Das Schaltelement kann zusätzlich oder alternativ hydraulisch oder pneumatisch betrieben werden. Hierdurch kann der Schaltvorgang auch bei einem Ausfall des elektrischen Systems ausgelöst werden.

Nachfolgend ist die erfindungsgemäße Stromschiene anhand eines in den Zeichnungen dargestellten Ausführungsbeispiels näher erläutert.
Fig. 1 Batterieraum
Fig. 2 erster Querschnitt, erste Alternative
Fig. 3 zweiter Querschnitt, erste Alternative
Fig. 4 erster Querschnitt, zweite Alternative
Fig. 5 zweiter Querschnitt, zweite Alternative

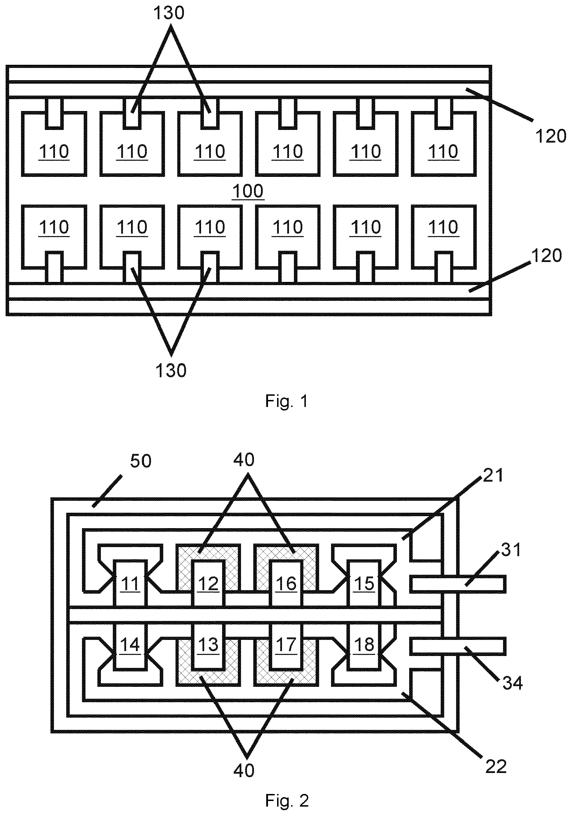

In Fig. 1 ist schematisch ein Batterieraum 100 gezeigt. Der Batterieraum 100 weist zwei Stromschienen 120 auf. Weiter weist der Batterieraum 100 im gezeigten Beispiel zwölf Batterien 110 auf. Üblicherweise wird eine größere Anzahl an Batterien 110 verwendet, zur Vereinfachung wurde jedoch eine geringe Anzahl gewählt. Die Batterien 110 sind über Verbindungen 130 mit den Stromschienen 120 verbunden. Es können auch mehrere Batterien 110 parallel oder in Reihe gemeinsam über eine Verbindung 130 mit der Stromschiene 120 verbunden sein.

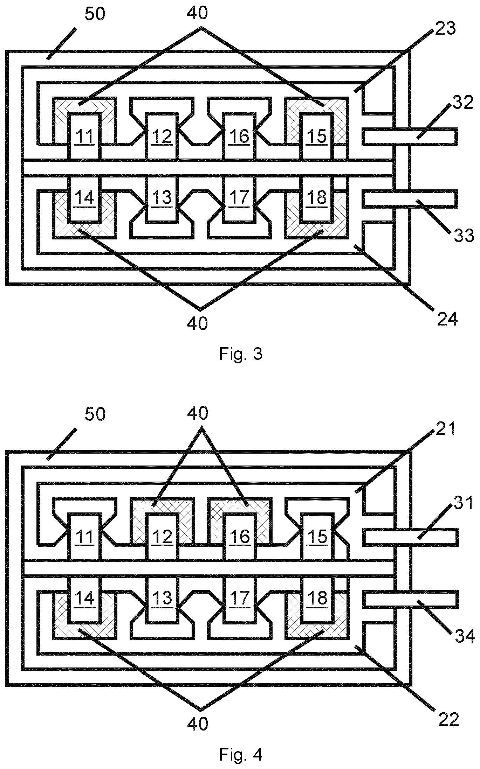

Wie die elektrische Kontaktierung zwischen den Batterien 110 und der Stromschiene 120 erfolgt und wie die Stromschiene 120 aufgebaut ist, ist in Fig. 2 und Fig. 3 für eine erste Alternative gezeigt. Hier ist der Querschnitt durch eine Stromschiene 120 an einem Stromabnahmepunkt gezeigt, an welchem die Verbindung 130 auf die Stromschiene 120 trifft.

Die Stromschiene 120 weist acht Schienenelemente auf. Dieses sind das erste Schienenelement 11, das zweite Schienenelement 12, das dritte Schienenelement 13, das vierte Schienenelement 14, das fünfte Schienenelement 15, das sechste Schienenelement 16, das siebte Schienenelement 17 und das achte Schienenelement 18. Die Schienenelemente sind derart angeordnet, dass sich zwei Gruppen mit kreuzweise gegenüberliegenden gleichen Phasen ergeben, wobei die beiden Gruppen spiegelsymmetrisch nebeneinander angeordnet sind. Somit sind das erste Schienenelement 11, das dritte Schienenelement 13, das fünfte Schienenelement 15 und das siebte Schienenelement 17 auf der ersten Phase und das zweite Schienenelement 12, das vierte Schienenelement 14, das sechste Schienenelement 16 und das achte Schienenelement 18 auf der zweiten Phase. Durch diese Anordnung ist eine maximale Reduktion der elektromagnetischen Signatur des Unterseebootes möglich, da die durch die fließenden Ströme erzeugten Magnetfelder sich weitestgehend gegenseitig kompensieren.

Das erste Schienenelement 11, das zweite Schienenelement 12, das sechste Schienenelement 16 und das fünfte Schienenelement 15 sind über ein erstes Sammelelement 21 mit dem ersten Kabel verbunden. Hierbei sind jedoch nur das erste Schienenelement 11 und das fünfte Schienenelement 15 elektrisch mit dem ersten Sammelelement 21 verbunden. Das zweite Schienenelement 12 und das sechste Schienenelement 16 sind über eine Isolation 40 mechanisch aber eben nicht elektrisch mit dem ersten Sammelelement 21 verbunden. Somit verbindet das erste Sammelelement 21 in das erste Kabel 31 elektrisch mit dem ersten Schienenelement 11 und dem fünften Schienenelement 15. Analog verbindet das zweite Sammelelement 22 das vierte Kabel 34 elektrisch mit dem vierten Schienenelement 14 und dem achten Schienenelement 18.

Fig. 3 ist ein Querschnitt benachbart zum Querschnitt welcher in Fig. 2 gezeigt ist. Während in Fig. 2 das erste Kabel 31 und das vierte Kabel 34 elektrisch kontaktiert sind, sind in Fig. 3 das zweite Kabel 32 über das dritte Sammelelement 33 und das dritte Kabel 33 über das vierte Sammelelement 34 elektrisch kontaktiert.

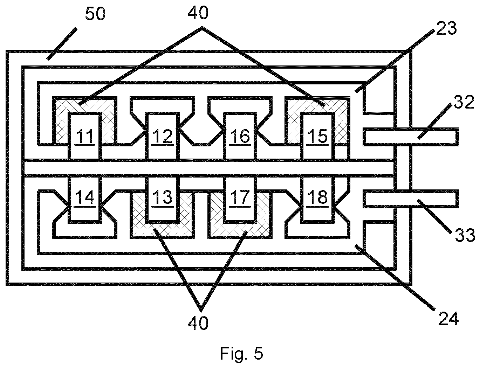

In Fig. 4 und Fig. 5 ist eine zweite Alternative gezeigt, bei welcher die Kontaktierungen in der unteren Hälfte gegenüber der ersten Alternative vertauscht sind. Somit sind die Polaritäten des dritten Schienenelements 13, des vierten Schienenelements 14, der siebenten Schienenelements 17 und des achten Schienenelements 18 gegenüber der ersten Alternative vertauscht. Auch diese Ausführungsform zeichnet sich durch ein extrem geringes Streufeld aus.

### Bezugszeichen

- 11: erstes Schienenelement
- 12: zweites Schienenelement
- 13: drittes Schienenelement
- 14: viertes Schienenelement
- 15: fünftes Schienenelement
- 16: sechstes Schienenelement
- 17: siebentes Schienenelement
- 18: achtes Schienenelement
- 21: erstes Sammelelement
- 22: zweites Sammelelement
- 23: drittes Sammelelement
- 24: viertes Sammelelement
- 31: erstes Kabel
- 32: zweites Kabel
- 33: drittes Kabel
- 34: viertes Kabel
- 40: Isolation
- 50: Gehäuse
- 100: Batterieraum
- 110: Batterie
- 120: Stromschiene
- 130: Verbindung

## Patentansprüche

1. Unterseeboot mit einem Batterieraum (100), wobei der Batterieraum (100) wenigstens zwei Batterien (110) aufweist, wobei der Batterieraum (100) wenigstens eine Stromschiene (120) aufweist, wobei die Stromschiene (120) wenigstens ein erstes Schienenelement (11) für eine erste Phase und ein zweites Schienenelement (12) für eine zweite Phase aufweist, wobei die Batterien (110) über jeweils eine elektrisch leitfähige Verbindung (130) mit der Stromschiene (120) verbunden sind, wobei die Verbindung (130) ein erstes Kabel (31) für eine erste Phase und ein zweites Kabel (32) für eine zweite Phase aufweist, wobei das erste Schienenelement (11) und das erste Kabel (31) über eine Klemmverbindung mit einander verbunden sind, wobei das zweite Schienenelement (12) und das zweite Kabel (32) über eine Klemmverbindung miteinander verbunden sind, wobei die Stromschiene (120) ein drittes Schienenelement (13) für eine erste Phase und ein vierter Schienenelement (14) für eine zweite Phase aufweist, wobei die Schienenelemente (11, 12, 13, 14, 15, 16, 17, 18) der Stromschiene (120) derart angeordnet sind, dass das erste Schienenelement (11) und das zweite Schienenelement (12) parallel nebeneinander angeordnet sind, wobei das dritte Schienenelement (13) und das vierte Schienenelement (14) parallel nebeneinander angeordnet sind, **dadurch gekennzeichnet, dass** die Schienenelemente (11, 12, 13, 14, 15, 16, 17, 18) flach ausgebildet sind, wobei das erste Schienenelement (11) und das zweite Schienenelement (12) mit der Breitseite zueinander benachbart angeordnet sind, wobei das dritte Schienenelement (13) und das vierte Schienenelement (14) mit der Breitseite zueinander benachbart angeordnet sind, wobei das erste Schienenelement (11) und das vierte Schienenelement (14) in einer Ebene angeordnet sind, wobei das zweite Schienenelement (12) und das dritte Schienenelement (13) in einer Ebene angeordnet sind.

2. Unterseeboot nach Anspruch 1, **dadurch gekennzeichnet, dass** die Schienenelemente (11, 12, 13, 14, 15, 16, 17, 18) mit rechteckigen Querschnitt, ausgebildet sind.

3. Unterseeboot nach einem der vorstehenden Ansprüche, **dadurch gekennzeichnet, dass** die Stromschiene (120) ein fünftes Schienenelement (15) für eine erste Phase und ein sechstes Schienenelement (16) für eine zweite Phase aufweist, wobei die Stromschiene (120) ein siebentes Schienenelement (17) für eine erste Phase und ein achtes Schienenelement (18) für eine zweite Phase aufweist.

4. Unterseeboot nach Anspruch 3, **dadurch gekennzeichnet, dass** die Schienenelemente (11, 12, 13, 14, 15, 16, 17, 18) der Stromschiene (120) derart angeordnet sind, dass das erste Schienenelement (11), das zweite Schienenelement (12), das sechste Schienenelement (16) und das fünfte Schienenelement (15) parallel nebeneinander angeordnet sind, wobei das achte Schienenelement (18), das siebte Schienenelement (17), das dritte Schienenelement (13) und das vierte Schienenelement (14) parallel nebeneinander angeordnet sind.

5. Unterseeboot nach Anspruch 4, **dadurch gekennzeichnet, dass** die Schienenelemente (11, 12, 13, 14, 15, 16, 17, 18) flach, vorzugsweise mit rechteckigen Querschnitt, ausgebildet sind, wobei das erste Schienenelement (11), das zweite Schienenelement (12), das sechste Schienenelement (16) und das fünfte Schienenelement (15) mit der Breitseite zueinander benachbart angeordnet sind, wobei das achte Schienenelement (18), das siebente Schienenelement (17), das dritte Schienenelement (13) und das vierte Schienenelement (14) mit der Breitseite zueinander benachbart angeordnet sind, wobei das erste Schienenelement (11) und das vierte Schienenelement (14) in einer Ebene angeordnet sind, wobei das zweite Schienenelement (12) und das dritte Schienenelement (13) in einer Ebene angeordnet sind, wobei das sechste Schienenelement (16) und das siebente Schienenelement (17) in einer Ebene angeordnet sind, wobei das fünfte Schienenelement (15) und das achte Schienenelement (18) in einer Ebene angeordnet sind.

6. Unterseeboot nach einem der vorstehenden Ansprüche, **dadurch gekennzeichnet, dass** die Verbindung (130) ein drittes Kabel (33) für die erste Phase und ein viertes Kabel (34) für die zweite Phase aufweist, wobei die Kabel (31, 32, 33, 34) parallel zueinander angeordnet sind, wobei die Kabel (31, 32, 33, 34) derart angeordnet sind, dass diese im Querschnitt an den Ecken eines Quadrates liegen, wobei die Phasen an den Ecken des Quadrates alternierend angeordnet sind.

7. Unterseeboot nach einem der Ansprüche 3 bis 5 in Kombination mit Anspruch 6, **dadurch gekennzeichnet, dass** das erste Kabel (31) jeweils mittels einer Klemmverbindung mit dem ersten Schienenelement (11) und dem fünften Schienenelement (15) elektrisch verbunden ist, wobei das zweite Kabel (32) jeweils mittels einer Klemmverbindung mit dem zweiten Schienenelement (12) und dem sechsten Schienenelement (16) elektrisch verbunden ist, wobei das dritte Kabel (33) jeweils mittels einer Klemmverbindung mit dem dritten Schienenelement (13) und dem siebten Schienenelement (17) elektrisch verbunden ist, wobei das vierte Kabel (34) jeweils mittels einer Klemmverbindung mit dem vierten Schienenelement (14) und dem achten Schienenelement (18) elektrisch verbunden ist.

8. Unterseeboot nach Anspruch 7 oder einem der Ansprüche 3 bis 5 in Kombination mit Anspruch 6, **dadurch gekennzeichnet, dass** das zweite Kabel (32) jeweils mittels einer elektrisch isolierten Klemmverbindung mit dem ersten Schienenelement (11) und dem fünften Schienenelement (15) verbunden ist, wobei das erste Kabel (31) jeweils mittels einer elektrisch isolierten Klemmverbindung mit dem zweiten Schienenelement (12) und dem sechsten Schienenelement (16) verbunden ist, wobei das vierte Kabel (34) jeweils mittels einer elektrisch isolierten Klemmverbindung mit dem dritten Schienenelement (13) und dem siebten Schienenelement (17) verbunden ist, wobei das dritte Kabel (33) jeweils mittels einer elektrisch isolierten Klemmverbindung mit dem vierten Schienenelement (14) und dem achten Schienenelement (18) verbunden ist.

9. Unterseeboot nach einem der vorstehenden Ansprüche, **dadurch gekennzeichnet, dass** die Schienenelemente (11, 12, 13, 14, 15, 16, 17, 18) aus einzelnen leitfähigen Lagen aufgebaut sind, bevorzugt aus 5 bis 50, besonders bevorzugt aus 10 bis 25.

10. Unterseeboot nach einem der vorstehenden Ansprüche, **dadurch gekennzeichnet, dass** die Stromschiene (120) für jede Batterie (110) einen Stromabnahmepunkt aufweist, wobei die Stromschiene (120) am Stromabnahmepunkt nicht isoliert ist.

11. Unterseeboot nach einem der vorstehenden Ansprüche, **dadurch gekennzeichnet, dass** die Stromschiene (120) Lagerungspunkte aufweist, wobei die Stromschiene (120) an den Lagerungspunkten mechanisch mit dem Unterseeboot verbunden ist.

12. Unterseeboot nach einem der vorstehenden Ansprüche, **dadurch gekennzeichnet, dass** die Schienenelemente (11, 12, 13, 14, 15, 16, 17, 18) über Sammelelemente (21, 22, 23, 24) mit den Kabeln (31, 32, 33, 34) verbunden sind.

13. Unterseeboot nach einem der vorstehenden Ansprüche, **dadurch gekennzeichnet, dass** die Verbindungen (130) ein aktives Schaltelement aufweisen, wodurch die elektrische Verbindung zwischen Batterie (110) und Stromschiene (120) getrennt und hergestellt werden kann.

## Claims

1. A submarine having a battery compartment (100), the battery compartment (100) comprising at least two batteries (110), the battery compartment (100) comprising at least one bus bar (120), the bus bar (120) comprising at least a first bar element (11) for a first phase and a second bar element (12) for a second phase, the batteries (110) being connected to the bus bar (120) via a respective electrically conductive connection (130), said connection (130) comprising a first cable (31) for a first phase and a second cable (32) for a second phase, said first rail element (11) and said first cable (31) being connected to each other via a clamp connection, said second rail element (12) and said second cable (32) being connected to each other via a clamp connection, said busbar (120) comprising a third rail element (13) for a first phase and a fourth rail element (14) for a second phase, wherein the rail elements (11, 12, 13, 14, 15, 16, 17, 18) of the conductor rail (120) are arranged such that the first rail element (11) and the second rail element (12) are arranged parallel to each other, wherein the third rail element (13) and the fourth rail element (14) are arranged parallel to each other, **characterized in that** the rail elements (11, 12, 13, 14, 15, 16, 17, 18) are formed flat, wherein the first rail element (11) and the second rail element (12) are arranged with the broadside adjacent to each other, wherein the third rail element (13) and the fourth rail element (14) are arranged with the broadside adjacent to each other, wherein the first rail element (11) and the fourth rail element (14) are arranged in a plane, wherein the second rail element (12) and the third rail element (13) are arranged in a plane.

2. A submarine according to claim 1, **characterized in that** the rail elements (11, 12, 13, 14, 15, 16, 17, 18) are rectangular in cross-section.

3. Submarine according to any one of the preceding claims, **characterized in that** said conductor rail (120) comprises a fifth rail element (15) for a first phase and a sixth rail element (16) for a second phase, said conductor rail (120) comprising a seventh rail element (17) for a first phase and an eighth rail element (18) for a second phase.

4. The submarine according to claim 3, **characterized in that** the rail elements (11, 12, 13, 14, 15, 16, 17, 18) of the conductor rail (120) are arranged such that the first rail element (11), the second rail element (12), the sixth rail element (16) and the fifth rail element (15) are arranged parallel to each other, wherein the eighth rail element (18), the seventh rail element (17), the third rail element (13) and the fourth rail element (14) are arranged parallel to each other.

5. Submarine according to claim 4, **characterized in that** the rail elements (11, 12, 13, 14, 15, 16, 17, 18) are flat, preferably with rectangular cross-section, the first rail element (11), the second rail element (12), the sixth rail element (16) and the fifth rail element (15) being arranged with the broadside adjacent to each other, the eighth rail element (18), the seventh rail element (17), the third rail element (13) and the fourth rail element (14) being arranged with the broadside adjacent to each other, wherein the first rail element (11) and the fourth rail element (14) are arranged in one plane, said second rail member (12) and said third rail member (13) being disposed in a plane, said sixth rail member (16) and said seventh rail member (17) being disposed in a plane, said fifth rail member (15) and said eighth rail member (18) being disposed in a plane.

6. Submarine according to any one of the preceding claims, **characterized in that** the connection (130) comprises a third cable (33) for the first phase and a fourth cable (34) for the second phase, the cables (31, 32, 33, 34) being arranged parallel to each other, the cables (31, 32, 33, 34) being arranged such that they lie in cross-section at the corners of a square, the phases being arranged alternately at the corners of the square.

7. A submarine according to any one of claims 3 to 5 in combination with claim 6, **characterized in that** said first cable (31) is electrically connected by means of a clamp connection to said first rail element (11) and said fifth rail element (15), respectively, said second cable (32) being electrically connected by means of a clamp connection to said second rail element (12) and said sixth rail element (16), respectively, the third cable (33) being electrically connected to the third rail element (13) and the seventh rail element (17) by means of a clamp connection in each case, the fourth cable (34) being electrically connected to the fourth rail element (14) and the eighth rail element (18) by means of a clamp connection in each case.

8. A submarine according to claim 7 or any one of claims 3 to 5 in combination with claim 6, **characterized in that** said second cable (32) is respectively electrically connected by means of an electrically insulated clamp connection to said first rail element (11) and said fifth rail element (15), said first cable (31) being respectively electrically connected by means of an electrically insulated clamp connection to said second rail element (12) and said sixth rail element (16), wherein the fourth cable (34) is connected to the third rail element (13) and the seventh rail element (17), respectively, by means of an electrically insulated clamp connection, wherein the third cable (33) is connected to the fourth rail element (14) and the eighth rail element (18), respectively, by means of an electrically insulated clamp connection.

9. Submarine according to one of the preceding claims, **characterized in that** the rail elements (11, 12, 13, 14, 15, 16, 17, 18) are constructed from individual conductive layers, preferably from 5 to 50, particularly preferably from 10 to 25.

10. Submarine according to any one of the preceding claims, **characterized in that** the busbar (120) comprises a current collection point for each battery (110), wherein the busbar (120) is not insulated at the current collection point.

11. A submarine according to any one of the preceding claims, **characterized in that** the bus bar (120) comprises bearing points, the bus bar (120) being mechanically connected to the submarine at the bearing points.

12. Submarine according to any one of the preceding claims, **characterized in that** the rail elements (11, 12, 13, 14, 15, 16, 17, 18) are connected to the cables (31, 32, 33, 34) via collecting elements (21, 22, 23, 24).

13. Submarine according to any one of the preceding claims, **characterized in that** said connections (130) comprise an active switching element, whereby the electrical connection between battery (110) and busbar (120) can be disconnected and established.

## Revendications

1. Sous-marin comprenant un compartiment de batterie (100), le compartiment de batterie (100) comprenant au moins deux batteries (110), le compartiment de batterie (100) comprenant au moins un rail d'alimentation (120), le rail d'alimentation (120) comprenant au moins un premier élément de rail (11) pour une première phase et un deuxième élément de rail (12) pour une deuxième phase, les batteries (110) étant reliées au rail d'alimentation (120) par une connexion électriquement conductrice (130) respective, la connexion (130) comprenant un premier câble (31) pour une première phase et un deuxième câble (32) pour une deuxième phase, le premier élément de rail (11) et le premier câble (31) étant connectés l'un à l'autre par une connexion par serrage, le deuxième élément de rail (12) et le deuxième câble (32) étant connectés l'un à l'autre par une connexion par serrage, le rail conducteur (120) comprenant un troisième élément de rail (13) pour une première phase et un quatrième élément de rail (14) pour une deuxième phase, les éléments de rail (11, 12, 13, 14, 15, 16, 17, 18) du rail conducteur (120) étant disposés de telle sorte que le premier élément de rail (11) et le deuxième élément de rail (12) sont disposés parallèlement l'un à côté de l'autre, le troisième élément de rail (13) et le quatrième élément de rail (14) étant disposés parallèlement l'un à côté de l'autre, **caractérisé en ce que** les éléments de rail (11, 12, 13, 14, 15, 16, 17, 18) sont formés à plat, le premier élément de rail (11) et le deuxième élément de rail (12) étant disposés avec le côté large adjacent l'un à l'autre, le troisième élément de rail (13) et le quatrième élément de rail (14) étant disposés avec le côté large adjacent l'un à l'autre, le premier élément de rail (11) et le quatrième élément de rail (14) étant disposés dans un plan, le deuxième élément de rail (12) et le troisième élément de rail (13) étant disposés dans un plan.

2. Sous-marin selon la revendication 1, **caractérisé en ce que** les éléments de rail (11, 12, 13, 14, 15, 16, 17, 18) ont une section transversale rectangulaire.

3. Sous-marin selon l'une quelconque des revendications précédentes, **caractérisé en ce que** le rail conducteur (120) comprend un cinquième élément de rail (15) pour une première phase et un sixième élément de rail (16) pour une deuxième phase, le rail conducteur (120) comprenant un septième élément de rail (17) pour une première phase et un huitième élément de rail (18) pour une deuxième phase.

4. Sous-marin selon la revendication 3, **caractérisé en ce que** les éléments de rail (11, 12, 13, 14, 15, 16, 17, 18) du rail conducteur (120) sont disposés de telle sorte que le premier élément de rail (11), le deuxième élément de rail (12), le sixième élément de rail (16) et le cinquième élément de rail (15) sont disposés parallèlement les uns à côté des autres, le huitième élément de rail (18), le septième élément de rail (17), le troisième élément de rail (13) et le quatrième élément de rail (14) étant disposés parallèlement les uns à côté des autres.

5. Sous-marin selon la revendication 4, **caractérisé en ce que** les éléments de rail (11, 12, 13, 14, 15, 16, 17, 18) sont plats, de préférence avec une section transversale rectangulaire, le premier élément de rail (11), le deuxième élément de rail (12), le sixième élément de rail (16) et le cinquième élément de rail (15) étant disposés avec le côté large adjacent les uns aux autres, le huitième élément de rail (18), le septième élément de rail (17), le troisième élément de rail (13) et le quatrième élément de rail (14) sont disposés avec le côté large adjacent l'un à l'autre, le premier élément de rail (11) et le quatrième élément de rail (14) étant disposés dans un plan, le deuxième élément de rail (12) et le troisième élément de rail (13) étant disposés dans un plan, le sixième élément de rail (16) et le septième élément de rail (17) étant disposés dans un plan, le cinquième élément de rail (15) et le huitième élément de rail (18) étant disposés dans un plan.

6. Sous-marin selon l'une quelconque des revendications précédentes, **caractérisé en ce que** la liaison (130) comprend un troisième câble (33) pour la première phase et un quatrième câble (34) pour la deuxième phase, les câbles (31, 32, 33, 34) étant disposés parallèlement les uns aux autres, les câbles (31, 32, 33, 34) étant disposés de manière à être situés, en section transversale, aux coins d'un carré, les phases étant disposées en alternance aux coins du carré.

7. Sous-marin selon l'une des revendications 3 à 5 en combinaison avec la revendication 6, **caractérisé en ce que** le premier câble (31) est relié électriquement respectivement au premier élément de rail (11) et au cinquième élément de rail (15) au moyen d'une connexion par serrage, le deuxième câble (32) étant relié électriquement respectivement au deuxième élément de rail (12) et au sixième élément de rail (16) au moyen d'une connexion par serrage, le troisième câble (33) étant respectivement relié électriquement au troisième élément de rail (13) et au septième élément de rail (17) au moyen d'une liaison par serrage, le quatrième câble (34) étant respectivement relié électriquement au quatrième élément de rail (14) et au huitième élément de rail (18) au moyen d'une liaison par serrage.

8. Sous-marin selon la revendication 7 ou l'une des revendications 3 à 5 en combinaison avec la revendication 6, **caractérisé en ce que** le deuxième câble (32) est relié respectivement au premier élément de rail (11) et au cinquième élément de rail (15) au moyen d'une connexion par serrage électriquement isolée, le premier câble (31) étant relié respectivement au deuxième élément de rail (12) et au sixième élément de rail (16) au moyen d'une connexion par serrage électriquement isolée, le quatrième câble (34) étant respectivement relié au troisième élément de rail (13) et au septième élément de rail (17) au moyen d'une connexion par serrage électriquement isolée, le troisième câble (33) étant respectivement relié au quatrième élément de rail (14) et au huitième élément de rail (18) au moyen d'une connexion par serrage électriquement isolée.

9. Sous-marin selon l'une des revendications précédentes, **caractérisé en ce que** les éléments de rail (11, 12, 13, 14, 15, 16, 17, 18) sont constitués de couches conductrices individuelles, de préférence de 5 à 50, de manière particulièrement préférée de 10 à 25.

10. Sous-marin selon l'une quelconque des revendications précédentes, **caractérisé en ce que** la barre conductrice (120) comporte un point de prélèvement de courant pour chaque batterie (110), la barre conductrice (120) n'étant pas isolée au point de prélèvement de courant.

11. Sous-marin selon l'une quelconque des revendications précédentes, **caractérisé en ce que** le rail d'alimentation (120) comporte des points d'appui, le rail d'alimentation (120) étant relié mécaniquement au sous-marin au niveau des points d'appui.

12. Sous-marin selon l'une des revendications précédentes, **caractérisé en ce que** les éléments de rail (11, 12, 13, 14, 15, 16, 17, 18) sont reliés aux câbles (31, 32, 33, 34) par des éléments collecteurs (21, 22, 23, 24).

13. Sous-marin selon l'une des revendications précédentes, **caractérisé en ce que** les connexions (130) comprennent un élément de commutation actif, ce qui permet de couper et d'établir la connexion électrique entre la batterie (110) et la barre omnibus (120).
